Europäisches Patentamt

European Patent Office

Office européen des brevets

(19)

(11) Publication number: **0 074 790**
**A1**

(12) **EUROPEAN PATENT APPLICATION**

(21) Application number: **82304708.9**

(22) Date of filing: **08.09.82**

(51) Int. Cl.³: **H 01 T 19/00**
**H 02 M 7/515**

(30) Priority: **10.09.81 US 301006**

(43) Date of publication of application:
**23.03.83 Bulletin 83/12**

(84) Designated Contracting States:
**AT BE CH DE FR GB IT LI LU NL SE**

(71) Applicant: **PILLAR CORPORATION**
**7000 West Walker Street**
**Milwaukee Wisconsin 53214(US)**

(72) Inventor: **Landis, James P.**
**7845 Mary Ellen Place**
**Wauwatosa Wisconsin 53213(US)**

(74) Representative: **Fisher, Bernard et al,**
**Raworth, Moss & Cook 36 Sydenham Road**
**Croydon Surrey CR0 2EF(GB)**

(54) **Plastic treater.**

(57) A plastic treater has an electrode adapted to be disposed in adjacently spaced relation relative to the material to be treated and AC power supply for providing a Corona discharge in the gap between the electrode and the material. The power supply includes a DC source coupled by an SCR to the primary of a transformer. A control is coupled to the gate of the SCR for adjusting the frequency of the gate signals in relation to the system power requirements. The secondary of the transformer is connected to the electrode which presents a capacitive load.

FIG.1

EP 0 074 790 A1

TITLE:  PLASTIC TREATER.                0074790

## BACKGROUND OF THE INVENTION

This invention relates to improvements in plastic treating devices.

In one type of Corona discharge plastic treater, an electrode is positioned adjacent to the plastic to be treated so as to form an air gap therebetween and a power supply provides AC power to the electrode so as to inonize the air gap and produce a Corona discharge.  Prior art power supplies for plastic treaters have included motor generators, spark gap oscillators, vacuum tubes, and solid state circuitry.  These systems have been characterized by relatively high cost and complexity.

## SUMMARY OF THE INVENTION

There is a primary object of the invention to provide a power supply for plastic treaters which is simple, reliable, inexpensive and relatively small in size and weight.

A further object of the invention is to provide a power supply which is relatively flexible and capable of powering capacity loads having a wide range of electrical characteristics.

These and other objects and advantages of the present invention will become more apparent from the detailed description taken thereof with the accompanying drawing.

In general terms, the invention comprises a power supply for a plastic treater including a source of DC power, a transformer, a unidirectional switching device which couples the DC source to the primary winding of the transformer, a control coupled to the unidirectional switching device for providing gate signals to the switching device in relation to the load power requirements, and the secondary transformer winding connected to an electrode which presents a capacity load.

BRIEF DESCRIPTION OF THE DRAWINGS

FIGURE 1 schematically illustrates the power supply for plastic treater in accordance with the present invention;

FIGURE 2 is the equivalent circuit of the apparatus illustrated in FIGURE 1;

FIGURE 3 shows a typical hysteresis characteristic for the core of the transformer illustrated in FIGURE 1;

FIGURE 4 shows the voltage and current and the circuit of FIGURE 1 when a core having the hysteresis characteristic of FIGURE 3 is employed; and

FIGURE 5 shows the voltage and current characteristics of the circuit of FIGURE 1 when a core having linear characteristics is employed.

DETAILED DESCRIPTION OF THE PREFERRED EMBODIMENT

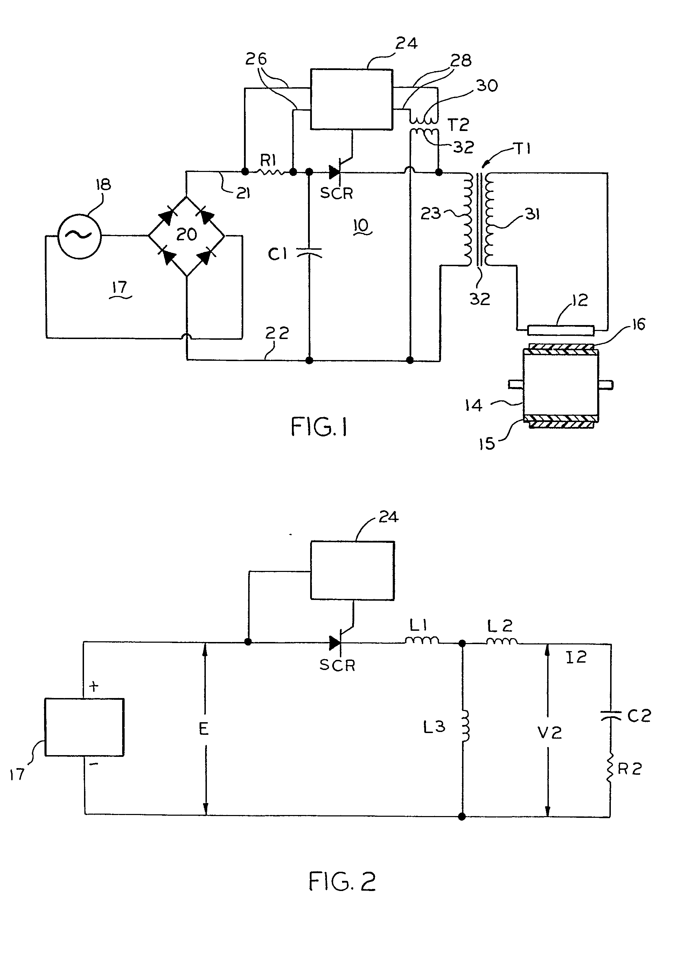

As seen in FIGURE 1, the treating apparatus according to the preferred embodiment of the invention includes a power supply 10 coupled to a highly conductive electrode 12 which is spaced from a rotatable drum 14 having a suitable dielectric material 15 attached to its surface. The plastic material 16, which is to have its surface treated, is received on the dielectric material 15. The electrode 12 is positioned relative to material 16 such that an air gap of approximately 1/16 of an inch is maintained therebetween. Power supply 10 provides power to the electrode 12 to break down the air gap and thereby produce a Corona discharge which, in a well-known way, treats the surface of the plastic material so that labels, ink, various coatings and other laminates may be adhered thereto.

The power supply 10 converts DC power to AC power and is connected to the electrode 12 by a transformer T1. More particularly, the power supply 10 includes a D.C. source comprising an alternating current source 18 and a full wave rectifier 20. Conductors 21 and 22 connect the source 17 to the primary winding 23 of transformer T1 through the anode-cathode circuit of silicon controlled rectifier SCR. The gate electrode of the SCR is connected to a control circuit 24 having a first pair of input conductors 26 connected across a resistor R1 connected in conductor 21 between the output terminal of rectifier 20 and a filter capacitor C1 which is connected between conductors 21 and 22. The second input conductors 28 of control 24 is connected to the secondary winding 30 of an isolation transformer T2 whose primary is connected across the primary winding 23 of transformer T1. The secondary winding 30 of transformer T1 is connected to electrode 12 and is linked to the primary winding 23 by a core 32.

The control 24 is conventional and therefore will not be discussed in detail. It will be sufficient for understanding the operation of the invention to state that the current flowing and resistor R1 will be proportional to the load current flowing in the secondary winding 31 of the transformer T1 to electrode 12 and hence will reflect the power requirements of the load. The control 24 will sense the potential across R1 and compare the same to a referenced potential. The frequency of firing pulses to the gate of the SCR is then determined by the relationship of these potential signals. The transformer T2 senses the voltage across the primary 23 of transistor T1 and provides a proportional signal to the control 24 which in turn insures that the firing signal frequency will not result in a voltage across transformer T1 which exceeds safe limits. In actual practice, the frequency of firing signals will be in the order of 5-20 kilohertz with about 10 kilohertz being typical.

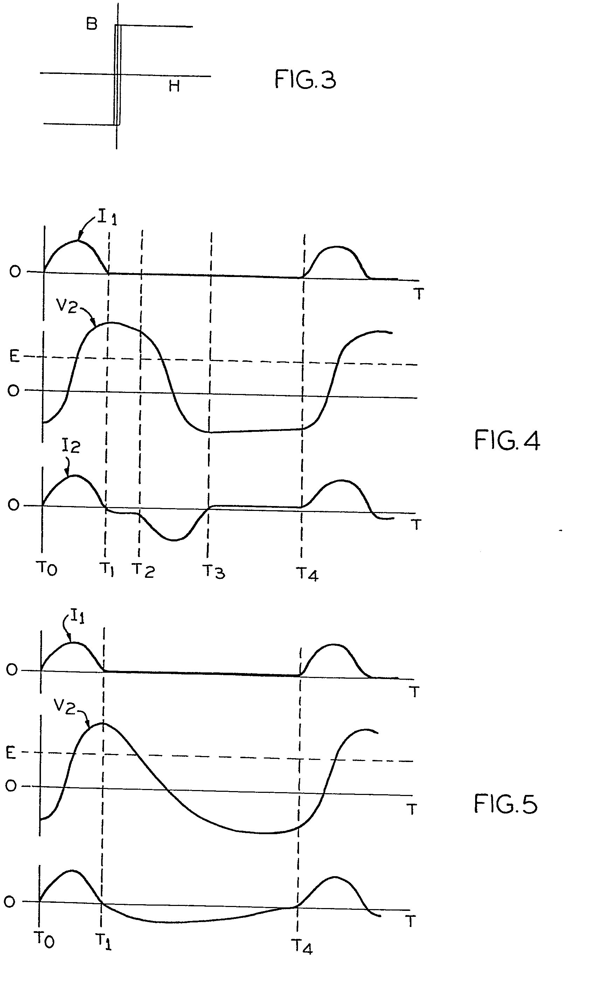

FIGURE 2 shows an equivalent circuit to the treater of FIGURE 1 wherein the transformer T1 is represented as a three terminal device comprising inductors L1, L2 and L3. The load is represented by capacitor C2 and resistor R2. Inductors L1 and L2 represent the primary and secondary leakage inductances, respectively and inductor L3 represents the magnetizing inductance. The magnetizing inductance L3 is highly dependent upon the type of core construction used in the transformer T1. For example, when the core 32 has the hysteresis characteristic shown in Figure 3, the magnetizing inductance L3 will be highly nonlinear. On the other hand, the magnetizing inductance will be relatively linear when the core 32 has a significant air gap. In the preferred embodiment of the invention, the inductance L3 is very high when compared to the inductances L1 and L2. A typical capacitive load such as that presented by a plastic treater, will be more complex than the capacitor C2 in the resistor R2 shown in FIGURE 2 but for purposes of understanding the invention, this representation is adequate.

FIGURE 4 illustrates the voltage and current in the circuit of FIGURE 2 when a core having the hysteresis characteristic of FIGURE 3 is employed. At time T0 the gate

- 5 -

signal is presented to the SCR which becomes conductive so that a substantially sinusoidal current pulse flows during the interval TO--T1 as determined primarily by the magnitude of the voltage E across source 17, the inductances L1 and L2 and the capicitance of C2. When the current I1 becomes zero the SCR will cease conducting so that I1 will cease flowing until the next gate signal at time T4.

The secondary current I2 is shown in Figure 4 to have substantially the same wave shape as I1 during the time TO--T1, differing therefrom mainly by the transformer turns ratio. The voltage V2 will change rapidly, attaining a maximum value near the termination of I1. During the interval T1--T2, the volage V2 is sustained at substantially a constant level as a result of the capacitive nature of the load C2, R2, there being only a small drop in voltage as a result of the low current flowing from load 12 through the high impedence L3. At time T2, the core 32 will become saturated causing an abrupt drop in the impedence of L3. This rapidly discharges the capacitive load, causting the negative current pulse I2 between the times T2--T3. Finally, at time T3, inductance L3 reverts to a high impedence state so that between the time T3--T4, the voltage V2 is again substantially constant, becoming slightly less negative as the low current flows through conductance L3. At time T4, the next cycle is initiated.

FIGURE 5 shows the primary and secondary current and secondary voltage wave forms when the core 32 has a significant air gap so that L3 is relatively linear. Here, the discharge of the capacitor C-2 through the conductor L-3 during the time T1--T4 is relatively more gradual than in the embodiment of FIGURE 4. It can also be seen that the negative portion of the current wave form of I2 is relatively longer and has a lower amplitude in FIGURE 5 than in FIGURE 4. In both embodiments, it can be seen that a relatively high frequency high voltage alternating wave as is required by a plastic treater or an ozonator can be obtained using transformers having a differing range of power characteristics. In particular, the embodiments of the invention provide alternating voltage waves in the range of 10 kilohertz and an amplitude of about 10,000 volts from a power supply system which is relatively compact and inexpensive. Further, varying transformer configurations may be employed depending upon frequency, cooling and voltage requirements. In this regard, the inductances L1 and L2 and to a lesser extent L3 should be made compatible with the frequency voltage and power levels desired. The techniques for determining these parameters are well within the capabilities of those skilled in the art. Additionally, the SCR should be selected with current and voltage capabilities consistent with the duty imposed, as illustrated by FIGURE 4.

While only a few embodiments of the invention have been illustrated and described, it is not intended to be limited thereby but only by the scope of the appended claims.

CLAIMS:

1.  A high frequency, high voltage power supply comprising:

a D. C. source,

a switching device coupled to the D. C. source and constructed and arranged to conduct current in a forward direction upon the application of a firing signal thereto,

a control coupled to the switching device for providing high frequency firing signals thereto whereby said switching device will conduct pulses upon the occurrence of a firing signal,

a transformer having first and second windings, said first winding being coupled to said switching device for receiving the current flowing therefrom,

a capacitive load connected to the second winding of said transformer, whereby a high frequency alternating voltage is applied to said capacitive load.

2.  The power supply set forth in Claim 1 wherein said transformer has a saturable core.

3.  The power supply set forth in Claim 1 wherein said transformer has a core provided with an air gap to provide a linear inductance throughout the range of current supply thereto.

4.  The power supply set forth in Claims 2 or 3 wherein said switching device includes a silicon controlled rectifier in circuit between said source of pulses and said transformer and a control coupled to the gate of said silicon controlled rectifier and constructed and arranged for providing high frequency gate signals thereto.

**0074790**

5.      A plastic treater for producing a corona discharge comprising an electrode adapted to be positioned adjacent the material to be treated thereby providing a capacitive load,

a D. C. source,

a switching device coupled to the unidirectional current source and constructed and arranged to conduct current in a forward direction upon the application of a firing signal thereto,

a control coupled to the switching device for providing high frequency firing signals thereto whereby said switching device will conduct pulses upon the occurrence of a firing signal,

a transformer having first and second windings, said first winding being coupled to said switching device for receiving the current flowing therefrom, the second winding of said transformer being connected to the electrode, whereby a high frequency alternating voltage is applied to said electrode.

6.      The power supply set forth in Claim 5, wherein said transformer has a saturable core.

7.      The power supply set forth in Claim 5 wherein said transformer has a core provided with an air gap to provide a linear inductance throughout the range of current supply thereto.

8.      The plastic treater set forth in claims 6 or 7 wherein said switching device includes a silicon controlled rectifier in circuit between said source of pulses and said transformer and a control coupled to the gate of said silicon controlled rectifier and constructed and arranged for providing high frequency gate signals thereto.

FIG. 1

FIG. 2

FIG.3

FIG.4

FIG.5

European Patent
Office

EUROPEAN SEARCH REPORT

0074790

Application number

EP 82 30 4708

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | --- | | H 01 T    19/00 |
| X,Y | US-A-3 875 035  (LOWTHER)  *Column 6, line 60 - column 3, line 29; figure 1* | 1,4,5, 8 | H 02 M     7/515 |
| | --- | | |
| Y | US-A-3 736 494  (UNION CARBIDE) *Column 4, line 56 - column 5, line 30; figures 3,4* | 4,5,8 | |
| | --- | | |
| X | US-A-4 027 169  (LOWTHER)  *Column 2, lines 17-65; Column 12, lines 4-28; figure 1* | 1,4,5, 8 | |
| | --- | | |
| A | GB-A-1 275 523  (PILLAR) *Page 2, lines 32-63; figures 1,3,4* | 2,6 | TECHNICAL FIELDS SEARCHED (Int. Cl. 3) |
| | --- | | |
| A | FR-A-1 533 302  (CIE GEN. DES EAUX) *Page 2, left-hand column , lines 34-42; figure 1* | 3,7 | H 01 T  H 02 M  C 01 B  G 03 G  B 41 M  B 29 C |
| | ----- | | |

The present search report has been drawn up for all claims

| Place of search THE HAGUE | Date of completion of the search 22-12-1982 | Examiner BIJN E.A. |
|---|---|---|